# EUROPEAN PATENT APPLICATION

(11) **EP 4 811 504 A1**
(43) Date of publication of application: **23.09.2026**
(21) Application number: 25165426.5
(22) Date of filing: 21.03.2025
(51) Int. Cl.: H01M 50/103, H01M 50/119, H01M 50/15, H01M 50/159, H01M 50/533, H01M 50/538, H01M 50/545, H01M 50/548, H01M 50/553, H01M 10/04, H01M 10/0583, H01M 10/0587

(54) **CELL FOR AN ENERGY STORAGE DEVICE AND METHOD OF MANUFACTURING THE CELL**

(71) Applicant: Volvo Car Corporation, 405 31 Göteborg (SE)
(72) Inventor: KARLSSON, Daniel, 40531 Göteborg (SE)
(74) Representative: Kransell & Wennborg KB

(57) **Abstract**

The disclosure relates to a cell (10) for an energy storage device (20), the cell (10) comprising: a first conductive substrate (12), a second conductive substrate (14), and a separating substrate (16) arranged between the first conductive substrate (12) and the second conductive substrate (14), wherein the first conductive substrate (12), the second conductive substrate (14) and the separating substrate (16) are arranged as a plurality of overlapping layers in a cell form, wherein the first conductive substrate (12) comprises a plurality of first tabs (120), wherein the plurality of first tabs (120) comprises a first outer tab extending from an outer layer of the plurality of overlapping layers and a first inner tab extending from an inner layer from the plurality of overlapping layers, the inner layer being located closer to a center of the cell form than the outer layer, wherein a length of the first outer tab is longer than a length of the first inner tab, and wherein the plurality of first tabs (120) is folded towards the center of the cell form such that adjacent first tabs in the plurality of first tabs (120) are in contact with one another.

## Description

### TECHNICAL FIELD

The present disclosure relates to a cell for an energy storage device, a method of manufacturing the cell, an energy storage device and a vehicle comprising the energy storage device.

### BACKGROUND ART

In current prismatic battery cells, a jelly roll containing an anode material and a cathode material is either wounded or stacked after a terminal of the jelly roll is created. The terminal is typically created over several process steps involving pressing, cutting and welding tab material to a substrate. Then, dedicated current collectors are welded to each tab of the anode material and the cathode material. The current collectors welded to the anode material and the cathode material are then welded or riveted to cell external terminals of the prismatic battery cell. This design comprising multiple interfaces being welded multiple times increases electrical resistance and decreases the volumetric efficiency of the prismatic battery cell.

Higher internal resistance is one of the major technical obstacles of today's prismatic battery cell. Higher internal resistance causes longer charging time and disturbs derating charging power of the prismatic battery cell. Derating the charging power can often be necessary to limit heat loss and to not damage the prismatic battery cell permanently.

Furthermore, volumetric inefficiency is another example of the major technical obstacles of today's prismatic battery cell. If the volumetric efficiency could be improved, more active materials for the anode and the cathode can be used and a larger battery capacity could be provided.

### DISCLOSURE OF THE INVENTION

The problem is at least partially solved or alleviated by the subject matter of the independent claims of the present disclosure, wherein further examples are incorporated in the dependent claims.

According to a first aspect, there is provided a cell for an energy storage device, the cell comprising: a first conductive substrate, a second conductive substrate, and a separating substrate arranged between the first conductive substrate and the second conductive substrate, wherein the first conductive substrate, the second conductive substrate and the separating substrate are arranged (e.g., rolled up, stacked, and/or folded) as a plurality of overlapping layers in a cell form, wherein the first conductive substrate comprises a plurality of first tabs, wherein the plurality of first tabs comprises a first outer tab extending from an outer layer of the plurality of overlapping layers and a first inner tab extending from an inner layer from the plurality of overlapping layers, the inner layer being located closer to a center of the cell form than the outer layer, wherein a length of the first outer tab is longer than a length of the first inner tab, and wherein the plurality of first tabs is folded towards the center of the cell form such that adjacent first tabs in the plurality of first tabs are in contact with one another.

In an example, the cell form may comprise a flattened geometry comprising two opposing first faces and two opposing second faces connecting the first faces with one another, the first faces being substantially planar and the second faces being substantially curved.

Generally, the cell may have any cell form in which the respective substrates may be arranged with respect to one another and/or inside the cell. For example, the substrates may be rolled up, stacked, and/or folded. Accordingly, the cell may for example be or comprise a jelly roll, a jelly stack, and/or a jelly folding or jelly fold. In other words, the cell form may be a jelly roll form, a jelly stack form, a jelly folding, or any combination of these forms. A jelly roll can be made by rolling (up) different substrates, in particular in the form of layers of substrate, as explained herein. A jelly stack can be made by stacking, where the substrates, in particular in the form of layers or sheets, are stacked on top of one another. Generally, layers of substrate can be cut with different length and then arranged in an order to form the jelly stack. For the folding, for example, the jelly folding or, in other words, jelly fold, or jelly folding form can for example be made by z-folding or vertical folding. For example, the separating substrate or separator can be provided inside the jelly folding form in a continuous zig zag shape. The first and second conductive substrate can be inserted into or in between each zig zag of the zig zag shaped separating substrate, in particular sequentially. Any exemplary reference herein to a jelly roll form equally refers or can be substituted by a jelly folding form, a jelly stack form or any combination of these three forms.

The energy storage device is a device to store energy. The energy storage device may generally be any of a supercapacitor, a battery and/or a thermal energy storage system. The cell for the energy storage device may be the smallest building block of the energy storage device. For example, the battery can be a single cell battery or may comprise a plurality of cells. The cell may refer to a single anode and a cathode separated by electrolyte used to produce voltage and current. A conductive substrate, such as the first conductive substrate and the second conductive substrate, may be substrates that are conductive. The conductive substrate is not limited to any type of conduction. For example, the conductive substate may be electrically conductive. The first conductive substate and the second conductive substate may be an anode of the energy storage device and a cathode of the energy storage device, respectively. The separating substrate may be a substrate separating the first conductive substrate from the second conductive substrate. The separating substrate may be permeable. In other words, the separating substrate may be a permeable membrane placed between the first conductive substrate and the second conductive substrate. For example, the separating substrate may be placed between an anode and a cathode of a battery to physically separate the anode and the cathode, that is, to keep the two electrodes apart to prevent short circuiting of the electrodes, while enabling transport of ions to close the circuit during the passage of current in the cell.

The cell form such as a jelly roll form may refer to a design used in cylindrical or prismatic rechargeable batteries, such as but not limited to nickel-cadmium, nickel-metal hybrid, and lithium-ion batteries. Generally, the cell form may be a jelly cell form. Such jelly cell form may have the appearance of a jelly roll, stack and/or folding or fold. For example, a jelly roll form comprises a cross-section which has the appearance of a jelly roll. The jelly roll form may be formed by rolling up layers of substrates. In the present disclosure, the first conductive substrate, the second conductive substrate and the separating substrate may be rolled up in the jelly roll form. The jelly roll form may be used in a cylindrical battery or a prismatic battery.

In the case of the prismatic battery, the rolled-up, stacked, and/or folded substrates may be pressed such that the cell form, e.g. jelly roll form, comprises a flattened geometry. The flattened geometry may be still in the cell or jelly cell form, e.g., jelly roll form, and at the same time, the flattened geometry may comprise two opposing first faces and the two opposing second faces connecting the first faces with one another. The first faces being substantially planar may mean that the first faces form planes that are substantially planar. The second faces being substantially curved may mean that the second faces are curved such that each end of the second faces connect opposing first faces by the second faces in bent shapes. The plurality of first tabs may be made of the same material as the first conductive substrate. The plurality of first tabs may be manufactured together with the first conductive substrate or attached to the first conductive substrate after manufacturing of the first conductive substrate itself. Alternatively, the plurality of first tabs may be made of a different material than the material of the first conductive substrate. The plurality of first tabs may be arranged at a side such that the plurality of first tabs is not rolled up together when the first conductive substrate is rolled up to form the jelly roll form. The plurality of first tabs may refer to parts extending from one side of the plurality of overlapping layers and facing each other. When the first conductive substrate is rolled up as the plurality of overlapping layers in the jelly roll form, the first outer tab may be understood as a tab of the plurality of first tabs which is arranged at the outer layer of the plurality of overlapping layers of the first conductive substrate. Similarly, the first inner tab may be understood as a tab of the plurality of first tabs which is arranged at the inner layer of the plurality of overlapping layers of the first conductive substrate. The length of a tab, such as the first outer tab or the first inner tab, may mean a length of the tab itself, starting from an edge of the first conductive substrate, on which the tab is arranged and to an end of the tab opposite to the edge of the first conductive substrate. In other words, the length of the tab may mean a length of a part of the tab extending from the first conductive substrate. In an example, the first outer tab may be adjacent with the first inner tab. In other words, the first outer tab may be extending from a layer of the plurality of overlapping layers of the first conductive substrate and the first inner tab may be extending from another layer of the plurality of overlapping layers of the first conductive substrate, wherein the layer and the other layer are adjacent.

Being folded may mean being bent or being deflected. The plurality of first tabs folded towards the center of the cell form may mean the plurality of first tabs being bent so that the first outer tab lies on the first inner tab. Since the length of the first outer tab is longer than the length of the first inner tab, when the plurality of first tabs is folded towards the center of the cell form, the first outer tab can be in contact with the first inner tab in a larger area compared to the case when the length of the first outer tab and the length of the first inner tab are same. Although it is preferable that an outer tab adjacent to an inner tab is longer than the inner tab, it is not necessary that every outer tab is longer than a tab adjacent to the outer tab and located closer to the center of the cell form. The outer tab may be the first outer tab and the inner tab may be the first inner tab. When the adjacent first tabs are in contact with one another, the adjacent first tabs may form a terminal of the first conductive substrate. The plurality of first tabs folded towards the center of the cell form and contacting each other may be rigid and/or strong enough to hold pressure applying to the plurality of first tabs. For example, the plurality of first tabs may be rigid enough to be directly welded to another part. In another example, the plurality of first tabs may be strong enough to support the weight of the cell, when the plurality of first tabs is located at a lower side of the cell.

According to an example, each one of the plurality of first tabs may be only in contact with one or two directly adjacent first tabs in the plurality of first tabs. In other words, the plurality of first tabs is not in contact with other parts of the first conductive substrate or even the second conductive substrate. By being in contact only with the one or two directly adjacent first tabs, it may be possible to prevent short circuiting, for example, a short circuiting for the first conductive electrode and the second conductive electrode, that is, a short circuiting of an anode and a cathode.

According to an example, lengths of the plurality of first tabs may be gradually shorter in direction towards the center of the cell form. As explained above, it is not necessary that every outer tab is longer than a tab adjacent to the outer tab and located closer to the center of the cell form. However, when the lengths of the plurality of first tabs are gradually shorter in direction towards the center of the cell form, that is, when every first outer tab is longer than an inner first tab closer to the center of the cell form, the plurality of first tabs can be folded so that every first outer tab lies on the respective adjacent first inner tab with enough overlapping surface. Layers formed by this example can be more rigid against pressure applying to the plurality of first tabs. For example, the folded plurality of first tabs may be strong enough to be directly welded with a lid, for example. Typically, such tabs extending from a conductive substrate are very thin and can easily be broken if a force is applied on the tabs. Therefore, in conventional technology, a structure for keeping the tabs intact or unbroken while providing conductive communication to another part, such as a lid forming a terminal was required. On the contrary, the plurality of first tabs folded towards the center of the cell form according to this example is strong enough such that the plurality of first tabs can be directly welded to another part. It is noted that the cell according to the first aspect can also provide the strength of the plurality of first tabs. In the present example, the strength or the rigidity of the plurality of first tabs is even more enhanced, since every outer tab can lie on the adjacent inner tab.

According to an example, the second conductive substrate may comprise a plurality of second tabs, the plurality of second tabs being arranged at the opposite side of the plurality of first tabs, the plurality of second tabs comprising a second outer tab extending from an outer layer of the plurality of overlapping layers and a second inner tab extending from an inner layer from the plurality of overlapping layers, wherein a length of the second outer tab is longer than a length of the second inner tab, and wherein the plurality of second tabs is folded towards the center of the cell form such that adjacent second tabs in the plurality of second tabs are in contact with one another. The second conductive substrate may be understood correspondingly to the first conductive substrate. The plurality of second tabs may be understood correspondingly to the plurality of first tabs. The second outer tab and the second inner tab may be understood correspondingly to the first outer tab and the first inner tab. In general, it is clear to the skilled person to understand that corresponding features can be applied to the plurality of second tabs as in the plurality of first tabs in this example. A difference is that the plurality of second tabs may be arranged at the opposite side of the plurality of first tabs. In other words, the plurality of second tabs may extend from the second conductive substrate, but from the opposite side in the cell form. In this way, the plurality of first tabs and the plurality of second tabs are arranged at different sides and short circuiting between the plurality of first tabs and the plurality of second tabs can be geometrically prevented.

According to a second aspect, there is provided a method of manufacturing the cell according to the first aspect, the method comprising: providing a foil of a first conductive material, the second conductive substrate and the separating substrate, lasering the foil to cut out the first conductive substrate comprising the plurality of first tabs from the first conductive material, layering the first conductive substrate, the second conductive substrate and the separating substrate to form the plurality of overlapping layers, arranging (e.g., rolling, stacking, and/or folding) the first conductive substrate, the second conductive substrate and the separating substrate to form the cell form, in particular comprising the flattened geometry; and folding the plurality of first tabs towards the center of the cell form such that adjacent first tabs in the plurality of first tabs are in contact with one another.

The foil may be a thin sheet of material, such as metal, appropriate for being rolled up to form the cell form. The first conductive material may be a copper foil, which is an anode material for a lithium-ion battery. However, the present disclosure is not limited thereto, and the first conductive material may be any other material appropriate for use as the anode material for the lithium-ion battery. Furthermore, the first conductive material may be any other material appropriate for use as the first conductive material in any other energy storage device. Also, the first conductive material may be a cathode material for the lithium-ion battery. It is noted that the second aspect can also be applied analogously for a cell with the plurality of second tabs manufactured from a second conductive material. The first conductive material and the second conductive material may be materials appropriate for forming the energy storage device together. Accordingly, if the first conductive material is the anode material of the lithium-ion battery, the second conductive material may be the cathode material of the lithium-ion battery, such as aluminum.

When lasering the first foil to cut out the first conductive substrate comprising the plurality of first tabs, the plurality of first tabs naturally has the first foil as its material as same as the first conductive substrate. Furthermore, in this way, manufacturing of the first conductive substrate can be simplified, since the plurality of the first tabs does not have to be attached after the manufacturing of the first conductive substrate. The plurality of first tabs may be lasered such that two first tabs to be arranged at the same distance from the center of the cell form have equal height. In this way, the cell form can have symmetrical geometry.

According to a third aspect, there is provided an energy storage device comprising: a cell according to the first aspect and a housing having a substantially prismatic shape, wherein the housing at least partially accommodates the cell, and wherein the housing comprises opposite ends forming electrical terminals of the energy storage device.

The energy storage device may be a prismatic battery, that is, a battery having a prismatic cell housing. The housing may be a rigid casing that encloses and protects a piece of equipment, such as the cell. Since the cell of a battery can be delicate, it may be necessary that the cell is at least partially accommodated within such housing. Therefore, the housing may be made of a rigid material such as aluminum or aluminum alloy, stainless steel and plastic. The substantially prismatic shape may be advantageous for better space utilization compared with cylindrical battery cells. At least partially accommodating the cell may mean that the housing does not have to enclose the cell completely. For example, the housing may have holes, orifices, slots, or an open side. It may be enough, if the housing can accommodate at least a part of the cell. The electrical terminals may be each of an anode terminal and a cathode terminal. The terminal may be a point at which a connection can be made to an electric circuit. The electrical terminals may be terminals connecting the first conductive substrate and the second conductive substrate. Since the cell according to the first aspect has a strong structure, any conventional prismatic cell design, if used with the cell according to the first aspect, could have an advantage of being stronger. Furthermore, the energy storage device may comprise a plurality of cells according to the first aspect and the housing at least partially accommodating the plurality of cells.

According to an example, the energy storage device may further comprise a lid, wherein the lid comprises a conductive material and wherein the lid is welded to the plurality of first tabs of the first conductive substrate of the cell and thereby forming a first electrical terminal of the electrical terminals at one of the opposite ends of the energy storage device. The plurality of first tabs may be, as explained above, rigid against the pressure and strong enough to be directly welded with a lid. In conventional designs, a spacer may be needed since a tab is not strong enough to be welded. The spacer may therefore provide protection and a connection at the same time. However, including such spacer in an energy storage device design may require a larger volume and may be inefficient in space. Therefore, the energy storage device according to this example without requiring the spacer can have a better volumetric efficiency.

According to an example, the lid may be arranged at a lower end of the opposite ends of the housing, and the lid and the housing may enclose the cell. In other words, the first electrical terminal may be arranged at the lower end of the housing. The lid may complement a missing part of the housing and thereby enclose the cell substantially fully with the housing. The lid and the housing may be attached to each other to form a stable enclosure of the cell. Enclosing the cell may mean surrounding the cell to keep the cell separate from other areas or parts.

According to an example, the housing may comprise a conductive material forming the first electrical terminal. When the housing comprises the conductive material, the housing may be conductive and may allow electricity to travel through the lid welded to the plurality of first tabs. In other words, the first electrical terminal may be expanded from the plurality of first tabs though the lid to the housing. Accordingly, in this example, the housing itself can function as the first electrical terminal.

According to an example, the energy storage device may further comprise a current collector below an upper end of the opposite ends of the housing, wherein the current collector is substantially planar and arranged on and in contact with the second conductive substrate of the cell. For example, the current collector may be in a substantially same size as an upper surface of the housing having the substantially prismatic shape. The current collector may be in contact with the second conductive substrate through a plurality of parts of the second conductive substate. When the second conductive substrate comprises the plurality of second tabs, the current collector may be in contact with a part of the plurality of second tabs. Since the current collector may be in contact with a larger area of the second conductive substrate of the cell, compared to conventional technologies using a smaller current collector, the energy storage device would experience much less bottleneck effect and thereby generate less heat due to the bottleneck effect.

According to an example, the energy storage device may further comprise an electrically isolating layer arranged between the current collector and the upper end of the housing. Since the housing may comprise a conductive material and may form the first electrical terminal itself, the electrically isolating layer may be arranged between the current collector and the upper end of the housing. The electrically isolating layer thus has an effect of preventing short circuiting of the energy storage device.

According to an example, each one of the housing and the electrically isolating layer may comprise a hole, wherein the holes may be aligned with each other, thereby forming a second electrical terminal of the electrical terminals, the second electrical terminal being connected to the current collector at the upper end of the housing. The housing may comprise the hole at the upper end of the housing. The upper end may be understood as the upper surface. Therefore, the hole of the electrically isolating layer and the hole of the housing may be aligned such that the distance between those holes would be minimum. Preferably, but not necessarily, the hole of the current collector and the hole of the housing may have the same shape and the same size. The hole of the housing may be large enough to enable easy access to the current controller but small enough so that the housing accommodates the cell enough. With these holes, an access to the current collector, which is in contact with the second conductive substate of the cell, becomes available, while the electrically isolating layer prevents short circuiting. Since the current collector is in contact with the second conductive substrate, the current collector accessible through these wholes may be understood as the second electrical terminal.

In an example, the first electrical terminal may be an anode terminal of the energy storage device, and the second electrical terminal may be a cathode terminal of the electrical device.

According to an example, the housing may comprise Ni-Steel. For example, the first conductive substrate may comprise copper. As an example, the lid may comprise Ni-Alu. For example, the anode material of the lithium-ion battery may be copper, and the cathode material of the lithium-ion battery may be aluminum. In an example, accordingly, the first conductive material may be copper, and the second conductive material may be aluminum.

For a conductive housing design according to an example, the conductive material of the housing should be considered to be a material appropriate for being connected to the first conductive material. The housing may be connected to the plurality of first tabs made of the first conductive material through the lid directly welded to the plurality of first tabs. Typically, the first conductive material may comprise copper and the housing may be made of aluminum. However, welding copper material and aluminum material is technically not desirable, as they have very different heat expansion coefficients which can lead to bad quality of the energy storage device. Accordingly, a conductive material of the lid should be considered to be a material appropriate for being welded and/or connected to both the first conductive substrate and the conductive material of the housing. Additionally, or alternatively, the conductive material of the housing can be considered to be something else than typical aluminum.

According to an example, the conductive material of the housing is preferably Ni-Steel. Compared to aluminum, steel is more cost effective.

According to an example, a possible and feasible material for the lid may be Ni-Cu or Ni-Alu. While both materials may be feasible as the conductive material for the lid, Ni-Alu may be preferred. Compared to Ni-Cu, which is heavier and more expensive, the lid comprising Ni-Alu may be more cost effective for the energy storage design.

Accordingly, the combination of the conductive material of the housing comprising Ni-Steel, the conductive material of the lid comprising Ni-Alu and the first conductive material comprising Cu, may be not only cost effective, but also lighter in weight.

According to a fourth aspect, there is provided a vehicle comprising the energy storage device according to the third aspect.

It should be noted that the above examples may be combined with each other irrespective of the aspect involved. Accordingly, the method may be combined with structural features and, likewise, the cell, energy storage device, and vehicle may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a cross-sectional view of a jelly roll form according to an aspect of the present disclosure.
- Figure 2a: shows a cross-sectional view of a first conductive substrate in the jelly roll form with a plurality of first tabs that are not folded.
- Figure 2b: shows a cross-sectional view of the first conductive substrate in the jelly roll form as in Figure 2a but with the plurality of the first tabs folded towards a center of the jelly roll form.
- Figure 3: shows the first conductive substate before being rolled up in the jelly roll form.
- Figure 4: shows a perspective view of inside of an energy storage device without an electrically isolating layer.
- Figure 5: shows a perspective view of the inside of the energy storage device as in Figure 4 but with the electrically isolating layer.
- Figure 6: shows a perspective view with a cross-sectional area of the energy storage device.
- Figure 7: shows another cross-sectional view of with another cross-sectional area of the energy storage device.
- Figure 8: shows a cross-sectional view of the energy storage device.

### DETAILED DESCRIPTION OF THE DRAWINGS

The Figures are merely schematic representations and serve only to illustrate examples of the disclosure. Identical or equivalent elements are in principle provided with the same reference signs.

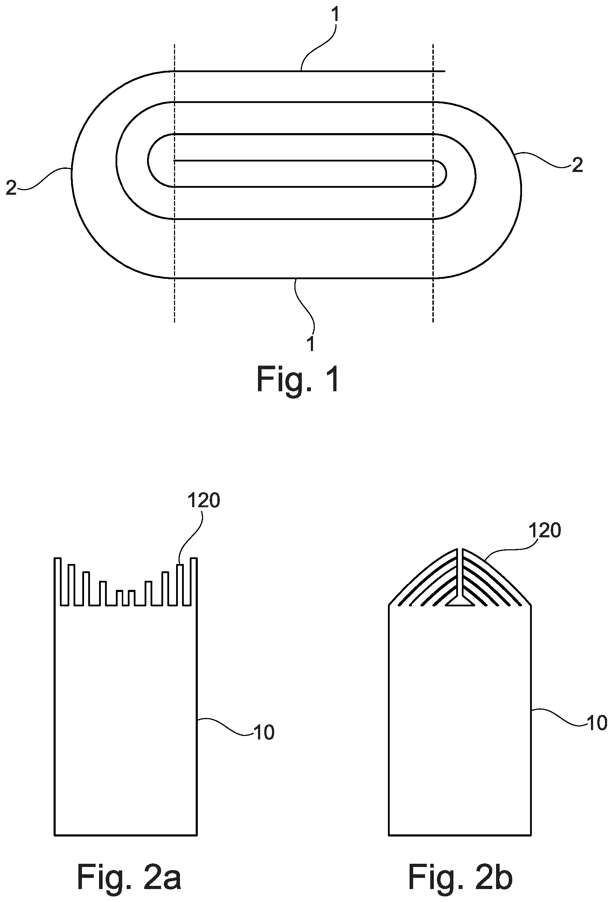

Figure 1 shows a cross-sectional view of a jelly roll form according to an aspect of the present disclosure. Alternatively, the jelly roll form in Fig. 1 and Figs. 2 to 8 may be a jelly stack form, a jelly folded, folding or fold form. Alternatively, the cell may comprise any other cell form comprising a shape or form in which respective substrates are arranged with respect to one another. The features described herein may equally apply to these other forms.

The jelly roll form of Fig. 1 exemplary comprises a flattened geometry comprising two opposing first faces 1 and two opposing second faces 2. The two opposing second faces 2 connect the two opposing first faces 1 with one another. The first faces 1 are each substantially planar and the second faces 2 are each substantially curved.

Figure 2a shows a cross-sectional view of a first conductive substrate in the jelly roll form with a plurality of first tabs not folded and Figure 2b shows a cross-sectional view of the first conductive substrate in the jelly roll form as in Figure 2a but with the plurality of the first tabs folded towards a center of the jelly roll form. In each Figure 2a and Figure 2b, a plurality of first tabs 120 is shown. A cell 10 comprises a first conductive substrate being rolled up in the jelly roll form and comprising a plurality of first tabs 120. Lengths of the plurality of first tabs 120 may be, as shown in Figure 2a, gradually shorter in direction towards the center of the jelly roll form. Figure 2b shows the cell 10 according to the first aspect, wherein the plurality of first tabs 120 is folded towards the center of the jelly roll from such that adjacent first tabs are in contact with one another. In Figure 2b, the plurality of first tabs 120 may be seen not to be in contact with one another, however, this is merely for a clear illustrative purpose and the present disclosure is not limited thereto.

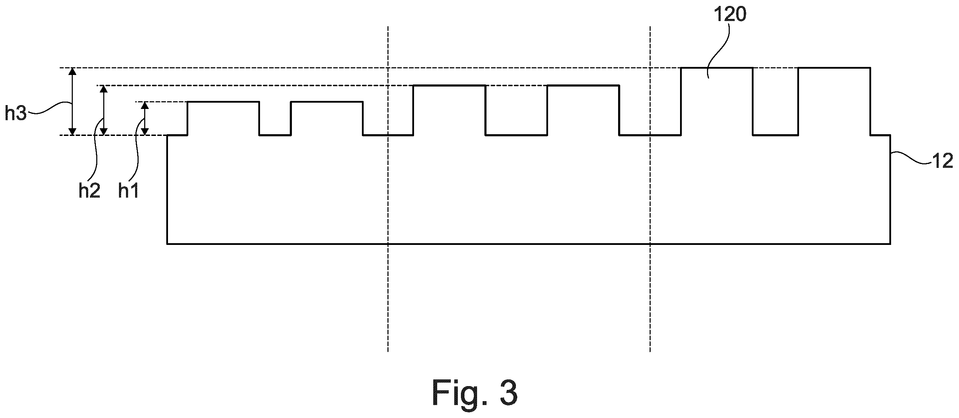

Figure 3 shows a first conductive substate 12 before being rolled up in the jelly roll form. The plurality of first tabs 120 of the first conductive substrate 12 can be lasered together when the first conductive substrate 12 is lasered from a foil. The plurality of first tabs 120 may be lasered such that a length of an outer tab is longer than a length of an inner tab. In an example that the plurality of first tabs 120 comprises six first tabs, lengths of the six first tabs may be as shown in Figure 3. Since the first conductive substate 12 rolled in the jelly roll form would be in a symmetrical form, every two first tabs may be lasered to have same lengths. In detail, height of the first two tabs may be h1, height of the next two tabs may be h2, height of the last two tabs may be h3. As shown in Figure 3, h3 is longer than h2 and h2 is longer than h1. The dotted vertical lines in Figure 3 can be understood as where 360° is repeated when the first conductive substrate 12 is being rolled in the jelly roll form. Accordingly, the first conductive substrate 12 and the plurality of first tabs 120 may be manufactured such that the length of the outer tab is longer than the length of the inner tab.

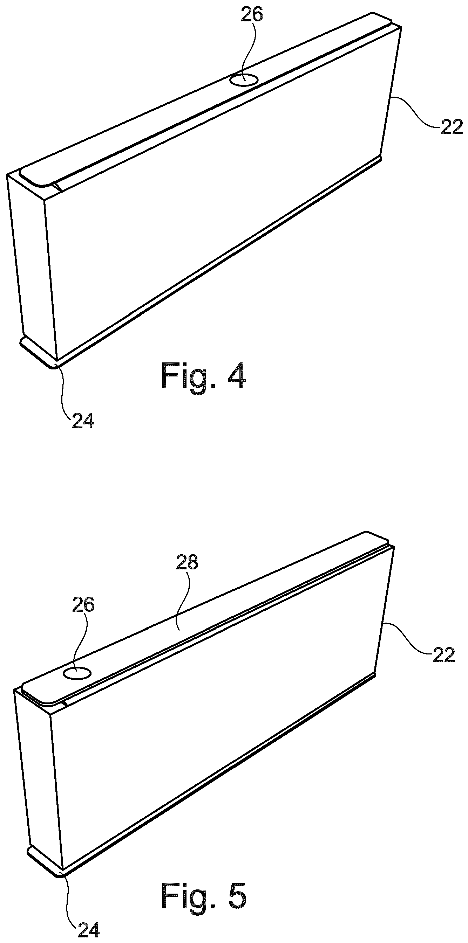

Figure 4 shows a perspective view of the inside of an energy storage device without an electrically isolating layer. In Figure 4, only a part of a housing 22 of the energy storage device is shown for an illustrative perspective. Specifically, an upper surface of the housing 22 has been omitted in Figure 4. The energy storage device may comprise a current collector 26. The current collector 26 may be arranged below the upper surface of the housing 22 which is not shown in Figure 4. The current collector 26 may be substantially planar.

Figure 5 shows a similar perspective view as in Figure 4 but shows an electrically isolating layer 28 additionally. As shown in Figure 5, the electrically isolating layer 28 may be arranged on the current collector 26. The electrically isolating layer 28 may comprise a hole as shown in Figure 5. The hole may form a second electrical terminal with an access to the current collector 26.

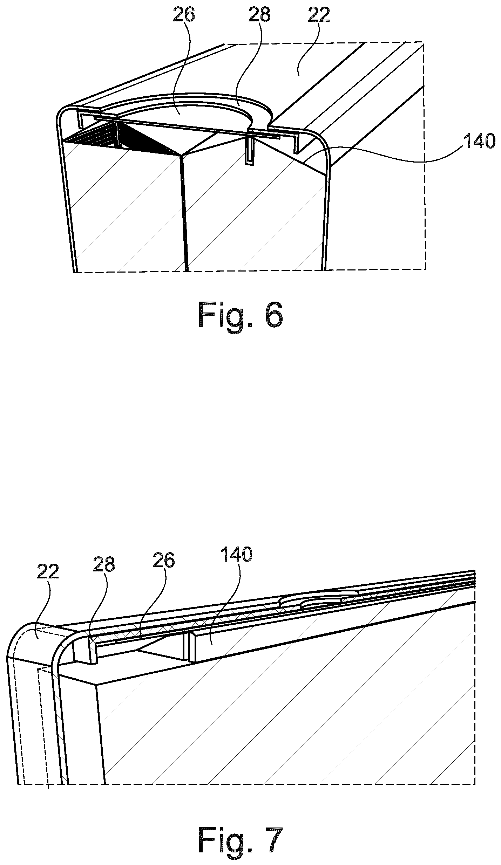

Figure 6 shows a perspective view with a cross-sectional area of the energy storage device. In Figure 6, the hole shown in Figure 5 is also visible. Furthermore, Figure 6 shows a hole of the housing 22. The hole of the housing 22 and the hole of the electrically isolating layer 28 may be aligned to form together the second electrical terminal. As shown in Figure 6, the hole of the housing 22 and the hole of the electrically isolating layer 28 do not have to be the same size. Through the hole of the housing 22 and the hole of the electrically isolating layer 28, the current collector 26 may be accessible. The current collector 26 may be in contact with a plurality of second tabs 140. Accordingly, the second electrical terminal may provide a connection to the plurality of second tabs 140.

Figure 7 shows another cross-sectional view of another cross-sectional area of the energy storage device. The electrically isolating layer 28 may be large enough to provide the electrical isolation between the upper surface of the housing 22 and the current collector 26. The electrically isolating layer 28 may be not limited in any form. The electrically isolating layer 28 may comprise a folded part as show in Figure 7 to provide the electrical isolation between the housing 22 and the current collector 26.

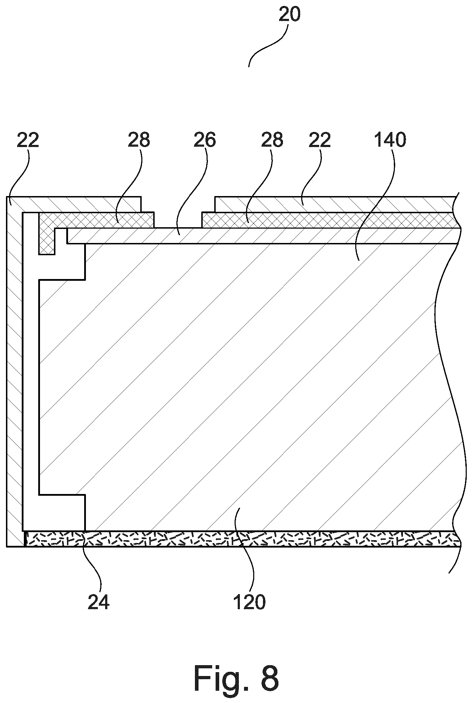

Figure 8 shows a cross-sectional view of the energy storage device 20. Further to the housing 22, the current collector 26, and the electrically isolating layer 28 shown in the previous Figures, Figure 8 further shows a lid 24. The lid 24 may be arranged at a lower part of the energy storage device 20. While the housing 22, the current collector 26, and the electrically isolating layer 28 may be arranged at a side where the plurality of second tabs 140 is accommodated, the lid 24 may be arranged at an opposite side where the plurality of first tabs 120 is accommodated. As shown in Figure 8, the lid 24 may be directly welded to the plurality of first tabs 120. By being directly welded to the plurality of first tabs 120, the lid 24 may be in electrical connection with the plurality of first tabs 120 and thereby form a first electrical terminal of the energy storage device 20.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: first faces
- 2: second faces
- 10: cell
- 12: first conductive substrate
- 120: plurality of first tabs
- 14: second conductive substrate
- 140: plurality of second tabs
- 16: separating substrate
- 20: energy storage device
- 22: housing
- 24: lid
- 26: current collector
- 28: electrically isolating layer

## Claims

1. A cell (10) for an energy storage device (20), the cell (10) comprising:
a first conductive substrate (12),
a second conductive substrate (14),
and a separating substrate (16) arranged between the first conductive substrate (12) and the second conductive substrate (14),
wherein the first conductive substrate (12), the second conductive substrate (14) and the separating substrate (16) are arranged as a plurality of overlapping layers in a cell form,
wherein the first conductive substrate (12) comprises a plurality of first tabs (120),
wherein the plurality of first tabs (120) comprises a first outer tab extending from an outer layer of the plurality of overlapping layers and a first inner tab extending from an inner layer from the plurality of overlapping layers, the inner layer being located closer to a center of the cell form than the outer layer,
wherein a length of the first outer tab is longer than a length of the first inner tab, and
wherein the plurality of first tabs (120) is folded towards the center of the cell form such that adjacent first tabs in the plurality of first tabs (120) are in contact with one another.

2. The cell (10) according to claim 1, wherein the cell form comprises a flattened geometry comprising two opposing first faces (1) and two opposing second faces (2) connecting the first faces (1) with one another, the first faces (1) being substantially planar and the second faces (2) being substantially curved,

3. The cell (10) according to claim 1 or 2, wherein each one of the plurality of first tabs (120) is only in contact with one or two directly adjacent first tabs in the plurality of first tabs (120).

4. The cell (10) according to any one of the previous claims, wherein lengths of the plurality of first tabs (120) are gradually shorter in direction towards the center of the cell form.

5. The cell (10) according to any one of preceding claims, wherein the second conductive substrate (14) comprises a plurality of second tabs (140), the plurality of second tabs (140) being arranged at the opposite side of the plurality of first tabs (120), the plurality of second tabs (140) comprising a second outer tab extending from an outer layer of the plurality of overlapping layers and a second inner tab extending from an inner layer from the plurality of overlapping layers,
wherein a length of the second outer tab is longer than a length of the second inner tab, and
wherein the plurality of second tabs (140) is folded towards the center of the cell form such that adjacent second tabs in the plurality of second tabs (140) are in contact with one another.

6. A method of manufacturing the cell (10) according to any one of preceding claims, the method comprising:
providing a foil of a first conductive material, the second conductive substrate (14) and the separating substrate (16),
lasering the foil to cut out the first conductive substrate (12) comprising the plurality of first tabs (120) from the first conductive material,
layering the first conductive substrate (12), the second conductive substrate (14) and the separating substrate (16) to form the plurality of overlapping layers,
arranging the first conductive substrate (12), the second conductive substrate (14) and the separating substrate (16) to form the cell form; and
folding the plurality of first tabs (120) towards the center of the cell form such that adjacent first tabs in the plurality of first tabs (120) are in contact with one another.

7. An energy storage device (20) comprising:
a cell (10) according to any one of claims 1 to 5, and
a housing (22) having a substantially prismatic shape, wherein the housing (22) at least partially accommodates the cell (10), and wherein the housing (22) comprises opposite ends forming electrical terminals of the energy storage device (20).

8. The energy storage device (20) according to claim 7, further comprising a lid (24),
wherein the lid (24) comprises a conductive material,
and wherein the lid (24) is welded to the plurality of first tabs (120) of the first conductive substrate (12) of the cell (10) and thereby forming a first electrical terminal of the electrical terminals at one of the opposite ends of the energy storage device (20).

9. The energy storage device (20) according to claim 8, wherein the lid (24) is arranged at a lower end of the opposite ends of the housing (22), and wherein the lid (24) and the housing (22) enclose the cell (10).

10. The energy storage device (20) according to claim 8, wherein the housing (22) comprises a conductive material forming the first electrical terminal.

11. The energy storage device (20) according to any one of claims 7 to 10, further comprising a current collector (26) below an upper end of the opposite ends of the housing (22), wherein the current collector (26) is substantially planar and arranged on and in contact with the second conductive substrate (14) of the cell (10).

12. The energy storage device (20) according to claim 11, further comprising an electrically isolating layer (28) arranged between the current collector (26) and the upper end of the housing (22).

13. The energy storage device (20) according to claim 12, wherein each one of the housing (22) and the electrically isolating layer (28) comprises a hole, wherein the holes are aligned with each other, thereby forming a second electrical terminal of the electrical terminals, the second electrical terminal being connected to the current collector (26) at the upper end of the housing (22).

14. The energy storage device (20) according to any one of claims 7 to 13, wherein the housing (22) comprises Ni-Steel and/or the first conductive substrate (12) comprises copper.

15. A vehicle comprising the energy storage device (20) according to any one of claims 7 to 14.
